# EUROPEAN PATENT APPLICATION

(11) **EP 4 575 553 A1**
(43) Date of publication of application: **25.06.2025**
(21) Application number: 23219350.8
(22) Date of filing: 21.12.2023
(51) Int. Cl.: G01S 7/35, G01S 13/34, G01S 7/288, G01S 13/26, G01S 13/931

(54) **RADAR WAVEFORM WITH DYNAMIC DOPPLER RESOLUTION**

(71) Applicant: GM Cruise Holdings LLC, San Francisco CA 94103 (US)
(72) Inventor: SANSON, Jessica Bartholdy, 85521 Ottobrunn (DE); KARACA, Özlem, 85521 Ottobrunn (DE); MUÑOZ, Jorge Julio Jácome, 85521 Ottobrunn (DE); GÜTLEIN-HOLZER, Johanna, 85521 Ottobrunn (DE); GIERE, Andre, 85521 Ottobrunn (DE)
(74) Representative: Berkenbrink, Kai-Oliver

(57) **Abstract**

A radar system comprises a receive antenna that receives a radar return, and circuitry configured to perform certain acts. The acts comprise processing the radar return to generate a radar signal comprising a plurality of ramps. The acts also comprise performing range fast Fourier transform (FFT) processing on the ramps as the ramps are received. The acts further comprise performing Doppler FFT processing on received ramps prior to receipt of all ramps in the radar signal. The acts also comprise outputting range and Doppler data.

## Description

### BACKGROUND

Autonomous or assisted driving strategies have been facilitated through sensing an environment around a vehicle. Radar sensors are conventionally used in connection with detecting and classifying objects in an environment; advantages of radar over other types of sensors (such as cameras or lidar) include robustness in regard to lighting and weather conditions. Often, radar sensors are deployed with cameras and/or lidar sensors to provide different modes of detection and redundancy. In certain scenarios, performance of lidar and/or cameras is negatively impacted by environmental features, such as fog, rain, snow, bright sunlight, lack of adequate light, etc. Accordingly, in these scenarios, radar is relied heavily upon to detect and classify objects in the environment, while lidar and camera sensors are less heavily relied upon.

Conventionally, a radar sensor generates a radar tensor, and the radar tensor is processed to detect and classify objects in the environment. For instance, the radar tensor includes power measurements generated by the radar sensor along different dimensions, such as Doppler, range, azimuth, and elevation. The radar tensor is then further processed to detect, classify, and track objects in the scene over time. As radar systems increase in popularity and are included in more and more vehicles, accurate tracking of moving objects becomes ever more important. False-positive detections are problematic, and at the same time, real objects need to be accurately and reliably detected and tracked. Conventional approaches have not satisfactorily addressed problems created by latency in signal processing when calculating range and Doppler data.

### SUMMARY

The following is a brief summary of subject matter that is described in greater detail herein. This summary is not intended to be limiting as to the scope of the claims.

Described herein are various technologies relating to radar systems, and more specifically, radar systems employed in autonomous vehicles, aircrafts, watercrafts, and the like. With more particularity, various technologies described herein facilitate reducing latency in radar signal processing time.

Radar processing latency in automotive radar refers to the time it takes for the radar system to process the received signals and generate actionable information for various applications like collision avoidance, adaptive cruise control, and object detection in real-time driving scenarios. Minimizing processing latency is important for ensuring timely and accurate responses in automotive radar systems.

In frequency modulated continuous wave (FMCW) radar systems, the radar system can start estimating the range of a detected object as soon as it receives each ramp in a reflected signal. However, to estimate the Doppler information for the detected object using conventional approaches, it is necessary that the radar system has already received all the ramps in a reflected signal. This means that the conventional radar system can only start Doppler estimation and other steps after the receiving the entire signal.

The duration of the signal on the FMCW radar is related to the Doppler resolution and sensitivity of the radar system; the longer the signal, the higher the Doppler resolution and the greater the sensitivity of the radar system due to longer target illumination time. The Doppler resolution required for automotive applications is usually achieved with a time delay that is less than the duration of the FMCW signal used. The long signal duration improves the sensitivity of the radar system when detecting targets, but also increases processing latency because conventional systems only perform Doppler processing once the entire signal has been received.

In order to overcome these problems, the described techniques reduce signal processing latency by initiating Doppler processing before all ramps in a reflected signal have been received. Upon receipt of a predefined number of ramps (i.e., a subset of all ramps in a reflected signal), or upon expiration of a predefined time period (e.g., several milliseconds or the like), Doppler processing is performed. This approach reduces Doppler resolution in the short range (e.g., 10 or 20 meters) where high Doppler resolution is less important due to the high angular resolution that is achieved in the short range. Doppler processing can again be performed once all ramps in the signal have been received.

A radar sensor receiving a reflected signal knows how many ramps are in the reflected signal because the radar sensor also generated and transmitted the signal. The total ramp number can be divided into two or more subsets, and, upon receipt of a final ramp in each subset, Doppler processing is performed. These subsets may comprise an equal number of ramps or may have different numbers of ramps.

In another embodiment, Doppler processing is performed upon expiration of a predetermined time period (e.g., every 3ms, 5ms, etc.) regardless of how many ramps have been received, and again upon receipt of a final ramp in the reflected signal.

The above summary presents a simplified summary in order to provide a basic understanding of some aspects of the systems and/or methods discussed herein. This summary is not an extensive overview of the systems and/or methods discussed herein. It is not intended to identify key/critical elements or to delineate the scope of such systems and/or methods. Its sole purpose is to present some concepts in a simplified form as a prelude to the more detailed description that is presented later.

### BRIEF DESCRIPTION OF THE DRAWINGS

Fig. 1 is a functional block diagram of an exemplary radar sensor.
Fig. 2 illustrates a more detailed view of the hardware logic component.
Fig. 3 shows another example of a radar sensor.
Fig. 4 illustrates a methodology for generating a radar point cloud.
Fig. 5 illustrates a methodology for reducing latency in radar signal processing.
Fig. 6 illustrates a radar signal received by a radar sensor after being reflected by an object.
Fig. 7 illustrates the difference in processing time between a conventional processing timeline and a processing timeline achieved using the herein described technique.
Fig. 8 illustrates a signal comprising a set of ramps, including a first subset which are used for Doppler processing prior to receipt of all ramps in the signal.
Fig. 9 is a functional block diagram of an exemplary AV.
Fig. 10 is an exemplary computing system.

### DETAILED DESCRIPTION

Various technologies pertaining to autonomous vehicle (and other) radar systems are described herein. In the following description, for purposes of explanation, numerous specific details are set forth in order to provide a thorough understanding of one or more aspects. It may be evident, however, that such aspect(s) may be practiced without these specific details. In other instances, well-known structures and devices are shown in block diagram form in order to facilitate describing one or more aspects. Further, it is to be understood that functionality that is described as being carried out by certain system components may be performed by multiple components. Similarly, for instance, a component may be configured to perform functionality that is described as being carried out by multiple components.

Moreover, the term "or" is intended to mean an inclusive "or" rather than an exclusive "or." That is, unless specified otherwise, or clear from the context, the phrase "X employs A or B" is intended to mean any of the natural inclusive permutations. That is, the phrase "X employs A or B" is satisfied by any of the following instances: X employs A; X employs B; or X employs both A and B. In addition, the articles "a" and "an" as used in this application and the appended claims should generally be construed to mean "one or more" unless specified otherwise or clear from the context to be directed to a singular form.

Further, as used herein, the terms "component" and "system" are intended to encompass computer-readable data storage that is configured with computer-executable instructions that cause certain functionality to be performed when executed by a processor. The computer-executable instructions may include a routine, a function, or the like. It is also to be understood that a component or system may be localized on a single device or distributed across several devices. Further, as used herein, the term "exemplary" is intended to mean serving as an illustration or example of something and is not intended to indicate a preference.

Radar system designers carefully consider latency requirements based on the specific application. In automotive radar systems, low latency is important for collision avoidance and adaptive cruise control functionalities. Efforts are made to minimize radar latency through various means, such as optimizing signal processing algorithms, employing high-speed data transmission methods, and using advanced hardware components with improved response times. However, it is important to strike a balance between reducing latency and maintaining the accuracy and reliability of the radar system, as overly aggressive latency reduction measures may compromise performance.

One way to reduce latency in radar systems is to shorten the signal duration, because signals with longer duration have a longer waiting time for processing. The herein-described technique uses a waveform with dynamic Doppler resolution that allows a reduction in the waiting time for signal processing, thereby obtaining a significant reduction in latency. Doppler resolution is reduced in the short range of the radar, which is an area where sensitivity and high Doppler resolution have less impact. At longer ranges, Doppler resolution and sensitivity are increased.

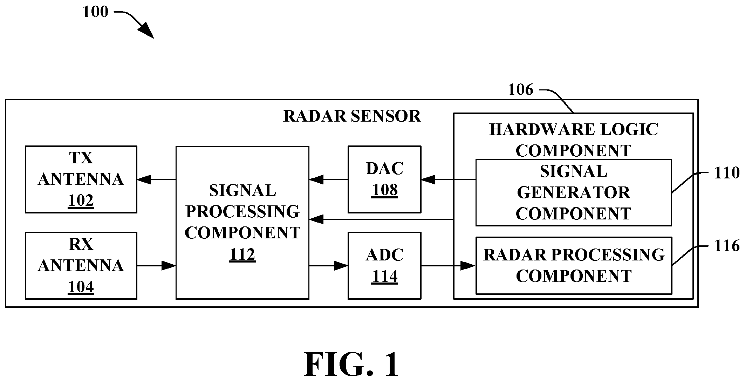

With reference now to Fig. 1, an exemplary radar sensor system (also referred to as a radar system) 100 is illustrated, in which various features, circuits, etc. described herein can be employed. The radar sensor 100 includes a transmit antenna 102, a receive antenna 104, and a hardware logic component 106. Briefly, the hardware logic component 106 is configured to prepare radar signals that are transmitted by the transmit antenna 102, and to compute target solutions indicating estimated positions and/or velocities of objects based upon radar returns and/or other radar signals received by the receive antenna 104. In exemplary embodiments, various components of the radar sensor 100 can be integrated as a same system-on-a-chip (SoC). In various embodiments, the radar sensor 100 can be employed on a vehicle, such as a land vehicle, an aircraft, to identify positions and velocities of objects in the operational environment of the vehicle.

The radar sensor 100 further comprises one or more DACs 108. The hardware logic component 106 comprises a signal generator component 110 that prepares radar signals for transmission by way of the transmit antenna 102. The signal generator component 110 is configured to control the DAC 108 to cause the DAC 108 to generate an analog radar signal for transmission by the transmit antenna 102. In other words, the signal generator component 110 generates digital values that, when received by the DAC 108, cause the DAC 108 to output an analog radar signal having various desired signal characteristics. Hence, the radar sensor 100 is configured as a digitally modulated radar sensor, wherein characteristics of radar signals output by the transmit antenna 102 are digitally controlled by the signal generator component 110 of the hardware logic component 106. For example, the signal generator component 110 can be configured to control the DAC 108 such that the radar sensor operates as a phase modulated continuous wave (PMCW) radar sensor.

The radar sensor 100 further includes an analog signal processing component 112. The signal processing component 112 is generally configured to perform various analog signal processing operations on analog signals that are to be output by the transmit antenna 102 and/or that are received by the receive antenna 104. By way of example, and not limitation, the signal processing component 112 can amplify a radar signal output by the DAC 108 to increase the power of the radar signal prior to transmission by way of the transmit antenna 102. In a further example, the signal processing component 112 can be configured to mix a radar signal output by the DAC 108 with a carrier signal to shift a center frequency of the radar signal. The signal processing component 112 can include any of various components that are configured to perform these various functions. For example, the signal processing component 112 can include mixers, amplifiers, filters, or the like. Functionality of the signal processing component 112 and its constituent components can be controlled by the hardware logic component 106. The transmit antenna 102 receives processed radar signals from the signal processing component 112 and emits the radar signals into an operational environment of the radar sensor 100.

The receive antenna 104 receives radar returns from the operational environment. In exemplary embodiments, the radar returns received by the receive antenna 104 comprise reflections, from objects in the operational environment of the sensor 100, of radar signals emitted by the transmit antenna 102. It is to be understood that the radar returns received by the receive antenna 104 can further include reflections of radar signals emitted by other radar emitters that are active within the operational environment of the radar sensor 100. Responsive to receipt of radar returns from the operational environment of the sensor 100, the receive antenna 104 outputs an electrical signal that is indicative of the received radar returns. This electrical signal is referred to herein as a radar signal and is transmitted along one or more transmission lines in the radar sensor 100, as distinct from radar returns that are received by the receive antenna 104 as radiated signals propagating through air or free space in the operational environment of the radar sensor 100.

The signal processing component 112 receives a radar signal from the receive antenna 104. The signal processing component 112 is configured to perform various analog signal processing operations over radar signals received from the receive antenna 104. By way of example, and not limitation, the signal processing component 112 can perform various mixing, filtering, and amplification operations on radar signals output by the receive antenna 104. The signal processing component 112 can be configured to perform various of these signal processing operations (e.g., mixing) based further upon a radar signal transmitted by the transmit antenna 102.

The radar sensor 100 further comprises one or more ADCs 114 that receives a processed radar signal from the signal processing component 112. The ADC 114 digitally samples the radar signal and outputs digital values that are indicative of amplitude of the radar signal over time. These digital values are collectively referred to herein as radar data. The radar data output by the ADC 114 are indicative of the radar returns received by the receive antenna 104.

The hardware logic component 106 receives the radar data from the ADC 114. The hardware logic component 106 further comprises a radar processing component 116. The radar processing component 116 is configured to compute positions and/or velocities of targets in the operational environment of the radar sensor 100 based upon the radar data. In a non-limiting example, the radar processing component 116 can compute a range, a bearing, and/or a velocity of a target in the operational environment of the sensor 100 based upon the radar data.

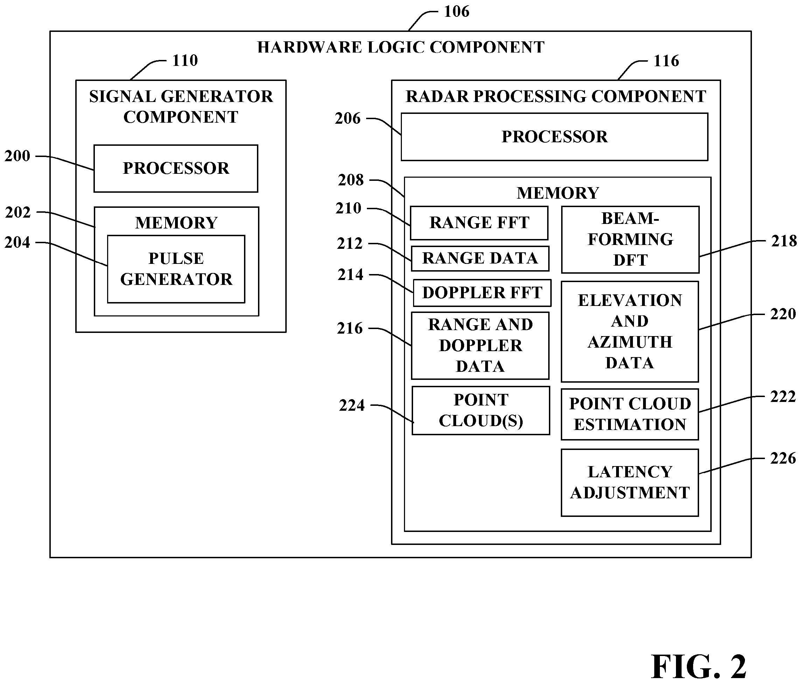

With reference now to Fig. 2, a more detailed view of the hardware logic component 106 is illustrated. The hardware logic component 106 comprises the signal generator component 110 and the radar processing component 116, as discussed with regard to Fig. 1. The signal generator component 110 comprises a processor 200 and a memory 202 configured to provide certain functionality as described herein. For example, the memory 202 can store computer-executable instructions that, when executed by the processor 200, cause the signal generator component 110 to perform certain acts. The memory 202 comprises a ramp/pulse generator component 204 that generates ramps/pulses (depending on the type of radar system) for transmission. In one embodiment, the ramp/pulse generator component 204 performs time division multiplexing and/or frequency division multiplexing on the signals to be transmitted.

The radar processing component 116 comprises a processor 206 and a memory 208 configured to provide certain functionality as described herein. For example, the memory 208 can store computer executable instructions that, when executed by the processor 206, cause the radar processing component 116 to perform certain acts. The memory 208 comprises a range fast Fourier transform (FFT) component 210 that is executed on a digitized signal received from an ADC, such as the ADC 114 of Fig. 1, to generate range data values 212 for objects detected in a received radar return. A Doppler FFT 214 is executed on the range values to generate range and Doppler data values 216. A discrete Fourier transform (DFT) 218 is then executed on the range and Doppler data values to generate elevation and azimuth data values 220. A point cloud estimation component 222 is executed to generate one or more multi-dimensional point clouds 224 representing at least the range data values 212, the range and Doppler data values 216, and the elevation and azimuth data values 220.

The memory 208 further comprises a latency adjustment component 226 that facilitates providing dynamic Doppler resolution by adjusting the start time and the size of the Doppler FFT 214 and the beamforming DFT 218, which facilitates providing different illumination times in the short and long range. Short range targets have a shorter illumination time since sensitivity is less important in the short range, and long range targets have a longer illumination time. With that, the estimation latency is reduced because the radar can start Doppler processing for the short range in advance, without having to wait for the radar to transmit and receive all of the signal ramps. Thus, the radar continues with the same sensitivity at longer ranges and maximum range with a decrease in processing latency. Doppler resolution is reduced in the short range, where it is less necessary due to the high density of points provided by the angular estimation of the targets. Latency is reduced by reducing the waiting time to start Doppler processing and by reducing the FFT size in the short range Doppler estimation.

In one embodiment, the latency adjustment component 226 triggers initial Doppler FFT processing upon receipt of a predetermined number of ramps (e.g., a first subset) in the received signal, the predetermined number of ramps being fewer than all ramps in the received signal. The predetermined number of ramps may be a predefined fraction (e.g., 0.1, 0.25, 0.5, etc.) of the total number of ramps in the received signal. In another embodiment, the latency adjustment component triggers initial Doppler FFT processing after a predetermined period of time has elapsed (e.g., 4ms, 8ms, 10ms, 12.5ms, etc.), regardless of how many ramps have been received. Once all ramps in the signal have been received, the latency adjustment component 226 again triggers Doppler FFT processing. By initiating Doppler processing prior to receipt of all ramps in the signal, the overall processing time of the signal is reduced.

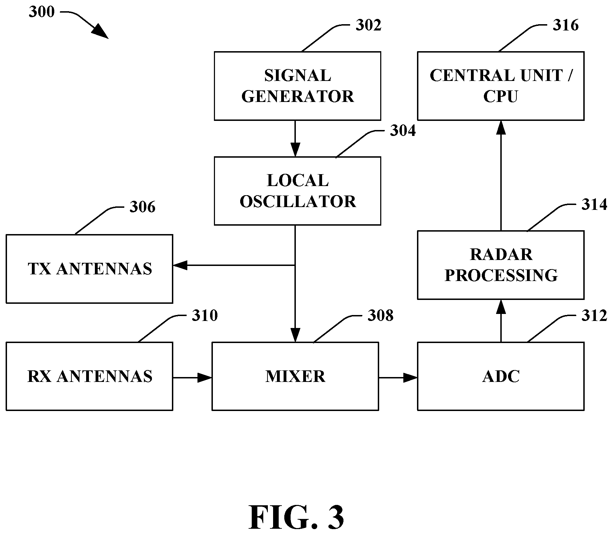

Fig. 3 shows another example of a radar sensor unit 300. In contrast to the embodiments described with regard to Figs. 1 and 2, where signal processing is performed at the radar unit, in the example of Fig. 3, signal processing at the radar sensor terminates with generation of the point clouds, which are then transmitted to a central processing unit or computer where they are processed further. The sensor 300 comprises a signal generator 302 that provides a signal to a local oscillator 304. The local oscillator 304 adjusts the signal for transmission via one or more transmit antennas 306. The local oscillator 304 also provides the transmit signal to a mixer 308, which combines the transmit signal with signals that have been reflected by an object and received by one or more receive antennas 310. The combined signal is then provided by the mixer 308 to an ADC 312, which digitizes the combined signal and provides the digitized signal to a radar processing component 314.

The radar processing unit 314 performs various acts on the digitized signal and provides functionality similar or identical to the functionality provided by the radar processing component 116 of the hardware logic component 106 (see, e.g., Figs. 1 and 2). The radar processing component 314 generates one or more multi-dimensional point clouds, which are then transmitted to a central processing unit or computer (PC) 316 for additional processing.

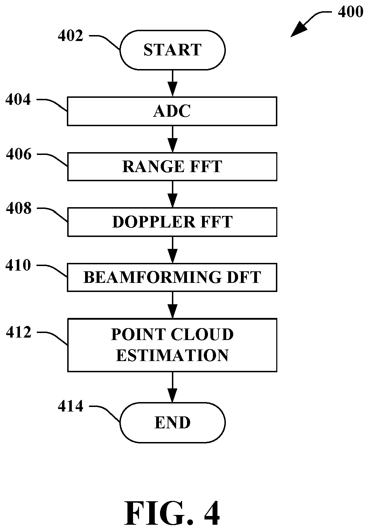

In one embodiment, the central processing unit 316 performs the processing steps described with regard to the radar processing component 116 of Fig. 2 and/or executes the methods of Figs. 4-5. In another embodiment, the central processing unit 316 receives raw radar data from a radar sensor and processes the raw data to generate point clouds and provide the functionality described herein.

Fig. 4-5 illustrate exemplary methodologies relating to reducing latency in radar signal processing. While the methodologies are shown and described as being a series of acts that are performed in a sequence, it is to be understood and appreciated that the methodologies are not limited by the order of the sequence. For example, some acts can occur in a different order than is described herein. In addition, an act can occur concurrently with another act. Further, in some instances, not all acts may be required to implement a methodology described herein.

Moreover, the acts described herein may be computer-executable instructions that can be implemented by one or more processors and/or stored on a computer-readable medium or media. The computer-executable instructions can include a routine, a sub-routine, programs, a thread of execution, and/or the like. Still further, results of acts of the methodology can be stored in a computer-readable medium, displayed on a display device, and/or the like.

Turning now solely to Fig. 4, a methodology 400 is illustrated for generating a radar point cloud. At 402, the method begins. At 404, at a given radar sensor, analog to digital conversion is performed on each signal acted by target object and received by the sensor. This step is performed for each array element (e.g., Tx/Rx pair) of the radar sensor. Once the received signals have been digitized, then at 406, a range fast Fourier transform is executed thereon to generate range data for the detected object. At 408, a Doppler FFT transform is executed on the range data in order to generate range and Doppler data. At 410, a beamforming discrete Fourier transform is executed on the range and Doppler data to generate elevation and azimuth data. At 412, the range data, the range and Doppler data, and the elevation and azimuth data are used for point cloud estimation. The method terminates at 414.

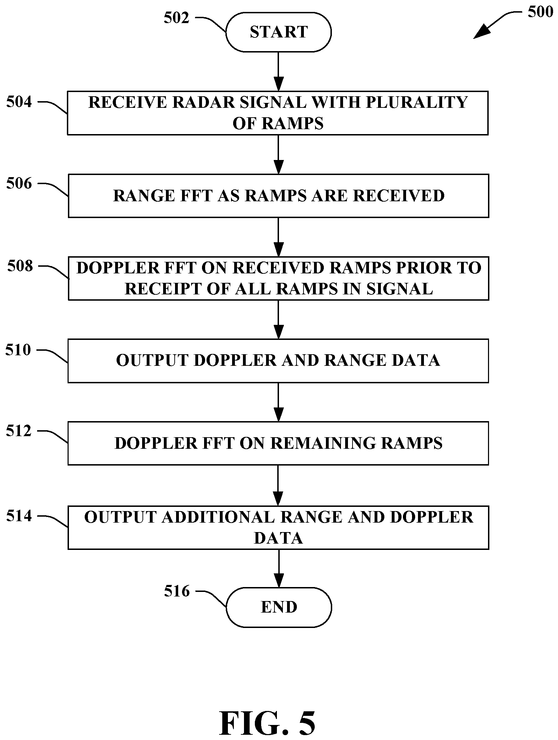

Turning now solely to Fig. 5, a methodology 500 is illustrated for reducing latency in radar signals processing by initiating Doppler FFT processing before all signal ramps have been received. The method begins at 502. At 504, a radar signal is received comprising a plurality of ramps. Range FFT processing is performed as the ramps are received to generate range data for an object by which the received signal has been reflected, at 506. At 508, Doppler FFT processing is performed on a first subset of received ramps prior to receipt of all ramps in the signal to generate Doppler (velocity) data. At 510, range and Doppler data for the subset of received ramps is output. In another embodiment, the range data generated at 506 is output as it is generated, and the Doppler data is output at 510 after the Doppler FFT processing has been performed. In either case, range FFT processing continues during and after Doppler FFT processing at 508. At 512, Doppler FFT processing is performed on the remaining ramps (i.e., a second subset) in the signal. At 514, additional range and Doppler data is output. The data can also be output continuously as it becomes available and prior to the Doppler FFT processing at 512. The method terminates at 516.

According to an example, the number of ramps in the received signal is known because the received signal was transmitted by the radar sensor receiving the signal and reflected off of an object in the environment monitored by the radar sensor. Therefore, a first subset comprising a predefined number of ramps can be defined, and Doppler processing can be initiated upon receipt of that number of ramps. It will be understood that the described technique is not limited to using two subsets of ramps but rather can employ any desired number of subsets. Additionally, the subsets may have an equal number of ramps or may have different numbers of ramps.

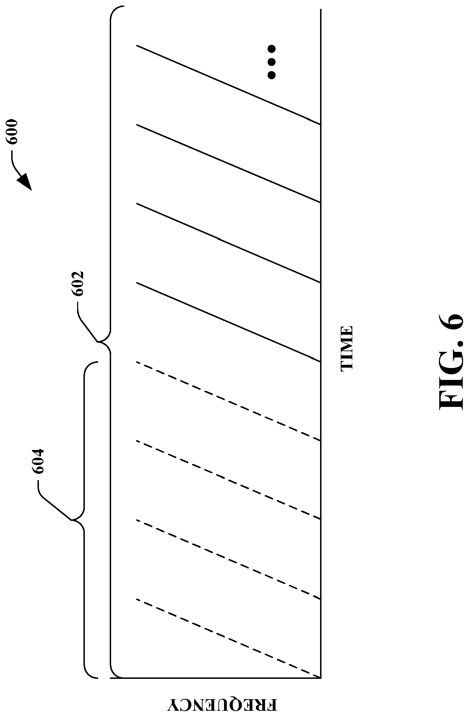

Fig. 6 illustrates a radar signal 600 received by a radar sensor after being reflected by an object. In conventional FMCW radar systems, the radar system performs range estimation as soon as it receives each ramp. Only after receiving all the ramps in a reflected signal does the conventional radar system start the Doppler processing, so the delay generated by the expected Doppler estimation is the same as the total duration of the signal.

The signal 600 comprises a set of ramps 602, a subset 604 of which are used for Doppler processing prior to receipt of all ramps in the set 602. That is, upon receipt of the last ramp in the subset 604, Doppler processing is initiated on the subset 604 while the remainder of the set of ramps 602 is still being received. By using fewer than all of the ramps in the signal 600, Doppler resolution in the short range (where it is less important) is reduced in favor of reducing latency in the overall processing of the signal 600.

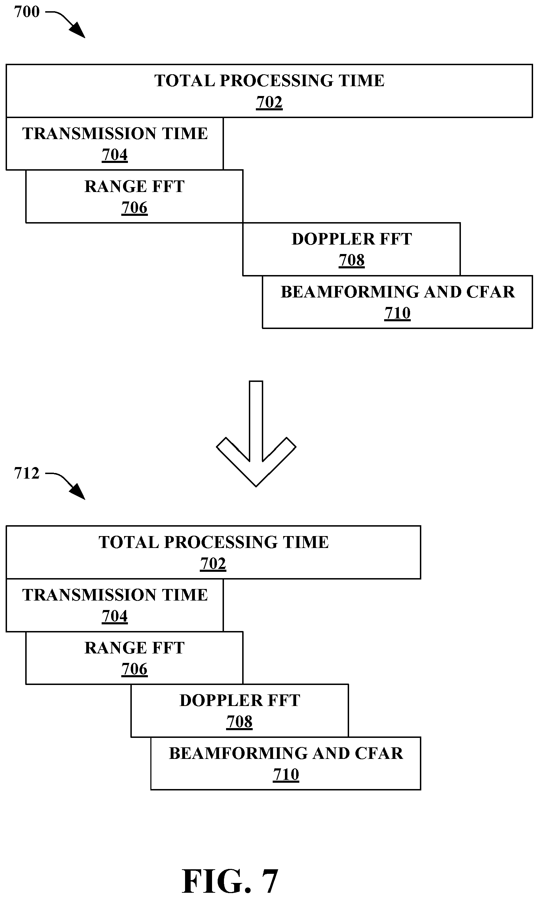

Fig. 7 illustrates the difference in processing time between a conventional processing timeline 700 and a processing timeline 712 achieved using the here-in described technique. The conventional processing timeline 700 shows the total processing time 702 that comprises the signal transmission time 704 and a range FFT duration 706 followed by Doppler FFT processing 708 and beamforming and constant false alarm rate (CFAR) processing 710. As can be seen, the range FFT processing is performed in real time upon receipt of respective signal ramps, whereas Doppler FFT processing 708 is not initiated until the range FFT processing 706 has been completed. Beamforming and CFAR processing 710 are initiated once the Doppler FFT processing 708 has been initiated.

In the improved processing timeline 712, total processing time 702 is reduced because the Doppler FFT processing 708 is initiated before completion of the range FFT processing 706. This, in turn, allows the beamforming and CFAR processing 710 to be initiated sooner, thus reducing total processing time 702.

With continued reference to Figs. 1-7, the described technique begins estimating the Doppler information for the short range prior to receipt of all the ramps in a reflected signal. For example, an FMCW radar with 1m range resolution, a maximum range of 100m, and employing a signal having 256 ramps with a duration of 0.1ms for each ramp, has a total transmission rate of 25.6ms. The described technique performs Doppler processing on fewer than all of the 256 ramps (e.g., 128 ramps for this example) for the first, e.g., 20 meters. Thus, for the first 20 meters the Doppler resolution is halved, but the latency introduced by the waiting time of the Doppler estimate is also halved, from 25.6ms to 12.8ms. The radar system can use different numbers of ramps and different ranges (i.e., it is not limited to two range intervals). For example, the system can use 64 ramps in the first 10 meters, 128 ramps between 10 to 20 meters, 192 ramps between 20 to 30 meters, and 256 ramps for the remainder of the range in order to reduce the processing latency even more.

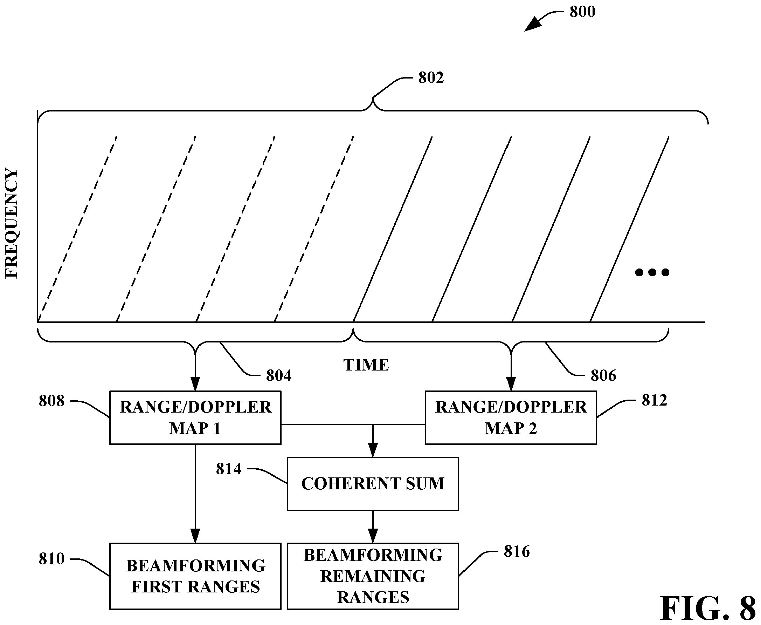

Fig. 8 illustrates a signal 800 comprising a set of ramps 802, including a first subset 804 which are used for Doppler processing prior to receipt of all ramps in the set 802. That is, upon receipt of the last ramp in the subset 804, Doppler processing is initiated on the subset 804 while the remainder of the set of ramps 802 (in this example, a second subset of ramps 806) is still being received. By using fewer than all of the ramps in the signal 800, Doppler resolution in the short range (where it is less important) is reduced in favor of reducing latency in the overall processing of the signal 800.

A first range and Doppler map 808 is generated using the first subset of ramps 804 in the manner described with regard to Fig. 6. That is, the range FFT can be performed as the ramps are received, and the Doppler FFT can be performed once all ramps in the subset 804 have been received, in order to generate the first range and Doppler map 808. Beamforming for the first ranges included in the first range and Doppler map 808 is performed at 810.

A second range and Doppler map 812 is generated using the second subset of ramps 806 in the same manner as the first range and Doppler map 808. That is, the range FFT is performed as the ramps in the second subset 806 are received and the Doppler FFT is performed once all ramps in the second subset 806 have been received, in order to generate the second range and Doppler map 812. At 814, coherent summation is performed on the first range and Doppler map 808 and the second range and Doppler map 812 to combine the range of Doppler information included therein. At 816, beamforming on the remaining ranges is performed.

The technique described with regard to Fig. 8 facilitates dividing the Doppler processing into a specific number of ramps and integrating the Doppler/range cells of each block only for the far range. For example, an FMCW radar with 1m range resolution, maximum range of 100m using 256 ramps per signal with a duration of 0.1ms for each ramp has a total transmission rate of 25.6ms. In a first stage, Doppler processing is performed for the first 128 ramps, and then the processing of beamforming is initiated for the first range interval (e.g., 10 meters, 20 meters, or some other range interval. In this example, for the first 20 meters half the ramps are used, but the latency introduced by the reduced waiting time of the Doppler estimate is halved, from 25.6 to 12.8ms.

In the second stage the Doppler is processed with the other half of the ramps (second subset 806) received later, thus generating two doppler/range maps 808, 812 of the same size. The two maps are integrated using their complex values and their appropriate phase corrections and beamforming for ranges above 20 meters (in this example) is performed. Hence, the Doppler resolution is uniform throughout the radar measurement and only a loss of illumination gain occurs in the short range.

It will be understood that the described aspects are not limited to dividing the total number of ramps in the signal into two subsets, but rather any desired number of subsets may be employed. Moreover the described aspects are not limited to signals comprising 256 ramps, but rather may employ any desired number of ramps divided into any desired number of subsets. Still furthermore, the subsets are not limited to comprising equal numbers of ramps, but rather may comprise different numbers of ramps.

In one embodiment, the total number of ramps in the signal is divided into percentages. For example, if the radar system has 100m range, then the first 10% (i.e., the first tenth) of the ramps in the signal are used for the first 10 meters, the next 10% (i.e., from 10-20%, or the second 10^{th}) of the ramps in the signal are used for 10 to 20 meters, and so on. Range FFTs are performed as the ramps are received in each subset, and Doppler FFTs are performed once all ramps in each subset are received. It will be understood that the foregoing example is not limited to dividing the signal into tenths, but rather any fraction(s) (fifths, sevenths, etc.) of the total number of ramps can be employed. Additionally, the fractions into which the total number of ramps are divided need not be equal.

In another embodiment, parallel processing is performed on the ramps in the received signals in the manner set forth herein. For instance, a predefined number of frames N can be processed, and then N+1 frames, N+2 frames, and so on in parallel.

In another embodiment, the number of ramps in the first subset is selected based on processing speed. For instance, a determination can be made regarding how many ramps can be processed withing a predetermined time period (e.g., 5ms, 10ms, or some other predetermined time period), and the first subset can be defined to include this number of ramps. The remainder of the ramps in the signal are allocated to the second subset of ramps or allocated among multiple subsequent subsets. Doppler processing of the first subset is initiated once all ramps in the first subset have been received.

In yet another embodiment, Doppler processing is performed after a predetermined period of time (e.g., 2ms, 5ms, 10ms, etc.) on the ramps received within that time period. Doppler processing is performed again on the remaining ramps in the signal once they have been received.

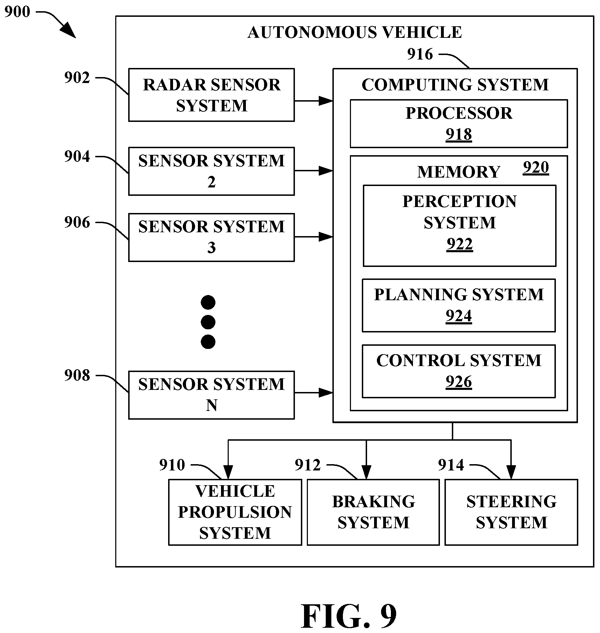

Various technologies described herein are suitable for use in connection with an autonomous vehicle (AV) that employs a radar system to facilitate navigation about roadways. Referring now to Fig. 9, an exemplary AV 900 is illustrated, wherein the AV 900 can navigate about roadways without human conduction based upon sensor signals output by sensor systems of the AV 900. The AV 900 includes a plurality of sensor systems 902-908 (a first sensor system 902 through an Nth sensor system 908). The sensor systems 902-908 may be of different types. For example, the first sensor system 902 is a radar sensor system, the second sensor system 904 may be a LiDaR sensor system, the third sensor system 906 may be a camera (image) system, and the Nth sensor system 908 may be a sonar system. Other exemplary sensor systems include GPS sensor systems, inertial sensor systems, infrared sensor systems, and the like. The various sensor systems 902-908 are arranged about the AV 900. The sensor systems 902-908 are configured to repeatedly (e.g., continuously, or periodically) output sensor data that is representative of objects and conditions in the driving environment of the AV 900.

The AV 900 further includes several mechanical systems that are used to effectuate appropriate motion of the AV 900. For instance, the mechanical systems can include but are not limited to, a vehicle propulsion system 910, a braking system 912, and a steering system 914. The vehicle propulsion system 910 may be an electric engine, an internal combustion engine, or a combination thereof. The braking system 912 can include an engine brake, brake pads, actuators, a regenerative braking system, and/or any other suitable componentry that is configured to assist in decelerating the AV 900. The steering system 914 includes suitable componentry that is configured to control the direction of movement of the AV 900.

The AV 900 additionally comprises a computing system 916 that is in communication with the sensor systems 902-908 and is further in communication with the vehicle propulsion system 910, the braking system 912, and the steering system 914. The computing system 916 includes a processor 918 and memory 920 that includes computer-executable instructions that are executed by the processor 918. In an example, the processor 918 can be or include a graphics processing unit (GPU), a plurality of GPUs, a central processing unit (CPU), a plurality of CPUs, an application-specific integrated circuit (ASIC), a microcontroller, a programmable logic controller (PLC), a field programmable gate array (FPGA), or the like.

The memory 920 comprises a perception system 922, a planning system 924, and a control system 926. Briefly, the perception system 922 is configured to identify the presence of objects and/or characteristics of objects in the driving environment of the AV 900 based upon sensor data output by the sensor systems 902-908. The planning system 924 is configured to plan a route and/or a maneuver of the AV 900 based upon data pertaining to objects in the driving environment that are output by the perception system 922. The control system 926 is configured to control the mechanical systems 912-914 of the AV 900 to effectuate appropriate motion to cause the AV 900 to execute a maneuver planned by the planning system 924.

The perception system 922 is configured to identify objects in proximity to the AV 900 that are captured in sensor signals output by the sensor systems 902-908. By way of example, the perception system 922 can be configured to identify the presence of an object in the driving environment of the AV 900 based upon images generated by a camera system included in the sensor systems 904-908. In another example, the perception system 922 can be configured to determine a presence and position of an object based upon radar data output by the radar sensor system 902. In exemplary embodiments, the radar sensor system 902 can be or include the radar sensor 100 and/or 300. In such embodiments, the perception system 922 can be configured to identify a position of an object in the driving environment of the AV 900 based upon the estimated range output by the radar sensor 100 and/or 300.

The AV 900 can be included in a fleet of AVs that are in communication with a common server computing system. In these embodiments, the server computing system can control the fleet of AVs such that radar sensor systems of AVs operating in a same driving environment (e.g., within line of sight of one another, or within a threshold distance of one another) employ different pulse sequence carrier frequencies. In an exemplary embodiment, a radar sensor system of a first AV can be controlled so as not to transmit pulse sequences having same center frequencies as pulse sequences transmitted by a radar sensor system of a second AV at the same time. In further embodiments, the radar sensor system of the first AV can be controlled to transmit pulse sequences in a different order than a radar sensor system of a second AV. For instance, the radar sensor system of the first AV can be configured to transmit a set of pulse sequences at four different center frequencies A, B, C, and D in an order A, B, C, D. The radar sensor system of the second AV can be configured to transmit pulse sequences using a same set of center frequencies in a frequency order B, A, D, C. Such configurations can mitigate the effects of interference when multiple AVs that employ radar sensor systems are operating in a same driving environment.

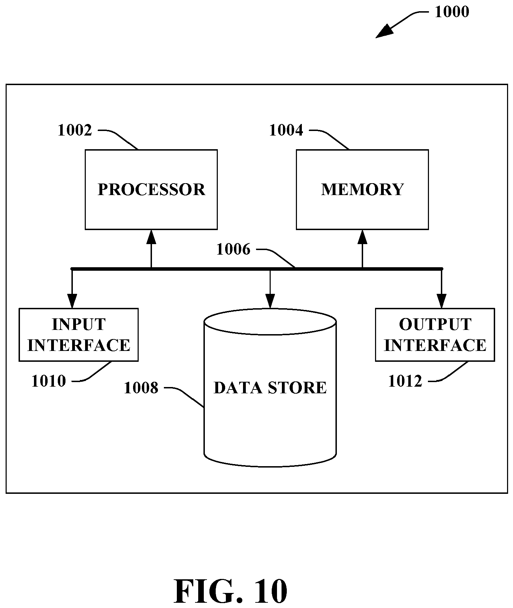

Referring now to Fig. 10, a high-level illustration of an exemplary computing device 1000 that can be used in accordance with the systems and methodologies disclosed herein is illustrated. For instance, the computing device 1000 may be or include the computing system 916. The computing device 1000 includes at least one processor 1002 that executes instructions that are stored in a memory 1004. The instructions may be, for instance, instructions for implementing functionality described as being carried out by one or more modules, components, or systems discussed above or instructions for implementing one or more of the methods described above. The processor 1002 may be a GPU, a plurality of GPUs, a CPU, a plurality of CPUs, a multi-core processor, a combination of the foregoing, etc. The processor 1002 may access the memory 1004 by way of a system bus 1006. In addition to storing executable instructions, the memory 1004 may also store radar data, beamformed radar data, neural network configurations, etc.

The computing device 1000 additionally includes a data store 1008 that is accessible by the processor 1002 by way of the system bus 1006. The data store 1008 may include executable instructions, radar data, beamformed radar data, embeddings of these data in latent spaces, etc. The computing device 1000 also includes an input interface 1010 that allows external devices to communicate with the computing device 1000. For instance, the input interface 1010 may be used to receive instructions from an external computing device, etc. The computing device 1000 also includes an output interface 1012 that interfaces the computing device 1000 with one or more external devices. For example, the computing device 1000 may transmit control signals to the vehicle propulsion system 910, the braking system 912, and/or the steering system 914 by way of the output interface 1012.

Additionally, while illustrated as a single system, it is to be understood that the computing device 1000 may be a distributed system. Thus, for instance, several devices may be in communication by way of a network connection and may collectively perform tasks described as being performed by the computing device 1000.

Various functions described herein can be implemented in hardware, software, or any combination thereof. If implemented in software, the functions can be stored on or transmitted over as one or more instructions or code on a computer-readable medium. Computer-readable media includes computer-readable storage media. A computer-readable storage media can be any available storage media that can be accessed by a computer. By way of example, and not limitation, such computer-readable storage media can comprise RAM, ROM, EEPROM, CD-ROM or other optical disk storage, magnetic disk storage or other magnetic storage devices, or any other medium that can be used to store desired program code in the form of instructions or data structures and that can be accessed by a computer. Disk and disc, as used herein, include compact disc (CD), laser disc, optical disc, digital versatile disc (DVD), floppy disk, and Blu-ray disc (BD), where disks usually reproduce data magnetically and discs usually reproduce data optically with lasers. Further, a propagated signal is not included within the scope of computer-readable storage media. Computer-readable media also includes communication media including any medium that facilitates transfer of a computer program from one place to another. A connection, for instance, can be a communication medium. For example, if the software is transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio and microwave are included in the definition of communication medium. Combinations of the above should also be included within the scope of computer-readable media.

Alternatively, or in addition, the functionally described herein can be performed, at least in part, by one or more hardware logic components. For example, and without limitation, illustrative types of hardware logic components that can be used include FPGAs, ASICs, Application-specific Standard Products (ASSPs), SOCs, Complex Programmable Logic Devices (CPLDs), etc.

Various functions described herein can be implemented in hardware, software, or any combination thereof. If implemented in software, the functions can be stored on or transmitted over as one or more instructions or code on a computer-readable medium. Computer-readable media includes computer-readable storage media. A computer-readable storage media can be any available storage media that can be accessed by a computer. By way of example, and not limitation, such computer-readable storage media can comprise RAM, ROM, EEPROM, CD-ROM or other optical disk storage, magnetic disk storage or other magnetic storage devices, or any other medium that can be used to store desired program code in the form of instructions or data structures and that can be accessed by a computer. Disk and disc, as used herein, include compact disc (CD), laser disc, optical disc, digital versatile disc (DVD), floppy disk, and Blu-ray disc (BD), where disks usually reproduce data magnetically and discs usually reproduce data optically with lasers. Further, a propagated signal is not included within the scope of computer-readable storage media. Computer-readable media also includes communication media including any medium that facilitates transfer of a computer program from one place to another. A connection, for instance, can be a communication medium. For example, if the software is transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio and microwave are included in the definition of communication medium. Combinations of the above should also be included within the scope of computer-readable media.

Alternatively, or in addition, the functionally described herein can be performed, at least in part, by one or more hardware logic components. For example, and without limitation, illustrative types of hardware logic components that can be used include FPGAs, ASICs, Application-specific Standard Products (ASSPs), SOCs, Complex Programmable Logic Devices (CPLDs), etc.

Described herein are various technologies according to at least the following examples.

(A1) In an aspect, a method performed by a radar system includes receiving a radar signal comprising a plurality of ramps. The method further includes performing range fast Fourier transform (FFT) processing on the ramps as the ramps are received. The method also includes performing Doppler FFT processing on received ramps prior to receipt of all ramps in the radar signal. Additionally, the method includes outputting range and Doppler data.

(A2) In some embodiments of the method of (A1), the method further includes performing the Doppler FFT processing on a first subset of the ramps upon receipt of a last ramp of the first subset and on the ramps of at least a second subset of the ramps upon receipt of a last ramp of the second subset.

(A3) In some embodiments of the method of (A2), the further includes generating a first range and Doppler map comprising range and Doppler data generated from the first subset of ramps and generating at least a second range and Doppler map comprising range and Doppler data generated from the second subset of ramps.

(A4) In some embodiments of the method of (A3), the method further includes performing beamforming on the range data generated from the first subset of ramps.

(A5) In some embodiments of the method of at least one of (A3)-(A4), the method further includes combining the range and Doppler data from the first range and Doppler map with the range and Doppler data from the second range and Doppler map. The method also includes performing beamforming on the combined range data.

(A6) In some embodiments of the method of at least one of (A2)-(A5), the first and second subsets of ramps comprise different numbers of ramps.

(A7) In some embodiments of the method of at least one of (A2)-(A6), a number of ramps in the first subset of ramps is based on a number of ramps that can be processed within a predetermined time period.

(B 1) In another aspect, a radar system is configured to perform at least one of the methods disclosed herein (e.g., any of the methods of (A1)-(A7)).

(C1) In yet another aspect, a radar system includes a hardware logic component (e.g., circuitry), where the hardware logic component is configured to control elements of a radar system to perform at least one of the methods disclosed herein (e.g., any of the methods of (A1)-(A7)).

(D1) In yet another aspect, a radar system includes a receive antenna that receives a radar return and circuitry configured to perform certain acts. The acts include processing the radar return to generate a radar signal comprising a plurality of ramps. The acts also include performing range fast Fourier transform (FFT) processing on the ramps as the ramps are received. The acts further include performing Doppler FFT processing on received ramps prior to receipt of all ramps in the radar signal. Additionally, the acts include outputting range and Doppler data.

(D2) In some embodiments of the radar sensor system of (D1), the acts further include performing the Doppler FFT processing on a first subset of the ramps upon receipt of a last ramp of the first subset and on the ramps of at least a second subset of the ramps upon receipt of a last ramp of the second subset.

(D3) In some embodiments of the radar sensor system of (D2), the acts further include generating a first range and Doppler map comprising range and Doppler data generated from the first subset of ramps and generating at least a second range and Doppler map comprising range and Doppler data generated from the second subset of ramps.

(D4) In some embodiments of the radar sensor system of (D3), the acts further include performing beamforming on the range data generated from the first subset of ramps.

(D5) In some embodiments of the radar sensor system of at least one of (D3)-(D4), the acts further include combining the range and Doppler data from the first range and Doppler map with the range and Doppler data from the second range and Doppler map. The acts also include performing beamforming on the combined range data.

(D6) In some embodiments of the radar sensor system of at least one of (D2)-(D5), the first and second subsets of ramps comprise different numbers of ramps.

(D7) In some embodiments of the radar sensor system of at least one of (D2)-(D6), a number of ramps in the first subset of ramps is based a number of ramps that can be processed within a predetermined time period.

(E1) In another aspect, a radar analysis system includes one or more processors configured to perform certain acts The acts include receiving a radar signal comprising a plurality of ramps. The acts further include performing range fast Fourier transform (FFT) processing on the ramps as the ramps are received. The acts also include performing Doppler FFT processing on received ramps prior to receipt of all ramps in the radar signal. Additionally, the acts include outputting range and Doppler data.

(E2) In some embodiments of the central processing unit (E1), the acts further include performing the Doppler FFT processing on a first subset of the ramps upon receipt of a last ramp of the first subset and on the ramps of at least a second subset of the ramps upon receipt of a last ramp of the second subset.

(E3) In some embodiments of the central processing unit (E2), the acts further include generating a first range and Doppler map comprising range and Doppler data generated from the first subset of ramps and generating at least a second range and Doppler map comprising range and Doppler data generated from the second subset of ramps.

(E4) In some embodiments of the central processing unit of (E3), the acts further include performing beamforming on the range data generated from the first subset of ramps.

(E5) In some embodiments of the central processing unit (E3)-(E4) the acts further include combining the range and Doppler data from the first range and Doppler map with the range and Doppler data from the second range and Doppler map. The acts also include performing beamforming on the combined range data.

(E6) In some embodiments of the central processing unit at least one of (E2)-(E5), the first and second subsets of ramps comprise different numbers of ramps.

(F1) In still yet another aspect, use of any of the radar systems (e.g., any of (B 1), (C1), (D1)-(D7) or (E1-E6)) to detect and classify a target is contemplated.

What has been described above includes examples of one or more embodiments. It is, of course, not possible to describe every conceivable modification and alteration of the above devices or methodologies for purposes of describing the aforementioned aspects, but one of ordinary skill in the art can recognize that many further modifications and permutations of various aspects are possible. Accordingly, the described aspects are intended to embrace all such alterations, modifications, and variations that fall within the spirit and scope of the appended claims. Furthermore, to the extent that the term "includes" is used in either the detailed description or the claims, such term is intended to be inclusive in a manner similar to the term "comprising" as "comprising" is interpreted when employed as a transitional word in a claim.

## Claims

1. A method performed by a radar system, the method comprising:
receiving a radar signal comprising a plurality of ramps;
performing range fast Fourier transform (FFT) processing on the ramps as the ramps are received;
performing Doppler FFT processing on received ramps prior to receipt of all ramps in the radar signal;
outputting range and Doppler data.

2. The method of claim 1, further comprising
performing the Doppler FFT processing on a first subset of the ramps upon receipt of a last ramp of the first subset and on the ramps of at least a second subset of the ramps upon receipt of a last ramp of the second subset.

3. The method of claim 2, further comprising generating a first range and Doppler map comprising range and Doppler data generated from the first subset of ramps and generating at least a second range and Doppler map comprising range and Doppler data generated from the second subset of ramps.

4. The method of claim 3, further comprising performing beamforming on the range data generated from the first subset of ramps.

5. The method of at least one of claims 3-4, further comprising:
combining the range and Doppler data from the first range and Doppler map with the range and Doppler data from the second range and Doppler map; and
performing beamforming on the combined range data.

6. The method of at least one of claims 2-5, wherein the first and second subsets of ramps comprise different numbers of ramps.

7. The method of at least one of claims 2-6, wherein a number of ramps in the first subset of ramps is based on a number of ramps that can be processed within a predetermined time period.

8. A radar system comprising:
a receive antenna that receives a radar return; and
circuitry configured to perform acts comprising:
processing the radar return to generate a radar signal comprising a plurality of ramps;
performing range fast Fourier transform (FFT) processing on the ramps as the ramps are received;
performing Doppler FFT processing on received ramps prior to receipt of all ramps in the radar signal;
outputting range and Doppler data.

9. The radar system of claim 8, the acts further comprising
performing the Doppler FFT processing on a first subset of the ramps upon receipt of a last ramp of the first subset and on the ramps of at least a second subset of the ramps upon receipt of a last ramp of the second subset.

10. The radar system of claim 9, the acts further comprising generating a first range and Doppler map comprising range and Doppler data generated from the first subset of ramps and generating at least a second range and Doppler map comprising range and Doppler data generated from the second subset of ramps.

11. The radar system of claim 10, the acts further comprising performing beamforming on the range data generated from the first subset of ramps.

12. The radar system of at least one of claims 10-11, the acts further comprising:
combining the range and Doppler data from the first range and Doppler map with the range and Doppler data from the second range and Doppler map; and
performing beamforming on the combined range data.

13. The radar system of at least one of claims 9-12, wherein the first and second subsets of ramps comprise different numbers of ramps.

14. The radar system of at least one of claims 9-13, wherein a number of ramps in the first subset of ramps is based a number of ramps that can be processed within a predetermined time period.

15. The radar system of at least one of claims 8-14, employed in an autonomous vehicle.
